# EUROPEAN PATENT APPLICATION

(11) **EP 2 197 201 A2**
(43) Date of publication of application: **16.06.2010**
(21) Application number: 09252705.0
(22) Date of filing: 01.12.2009
(51) Int. Cl.: H04N 5/445

(54) **Promotional labelling of a television apparatus**

(30) Priority: 10.12.2008 GB 0822534
(71) Applicant: Sony España SA, 08032 Barcelona (ES)
(72) Inventor: Vidal, Arnau Llovet, 08034-Barcelona (ES)
(74) Representative: Merryweather, Colin Henry

(57) **Abstract**

For the purpose of promotional labelling, a television apparatus modifies the video signal supplied to the display device to superimpose promotional graphics that indicate technical information about the television apparatus onto the video image that is displayed. This avoids the need for adhesive labels, thereby reducing cost and avoiding damage caused removal of adhesive labels.

## Description

The present invention relates to the labelling of television apparatuses for promotional purposes.

Television apparatuses are often promoted in shops using adhesive labels that indicate technical information about the television apparatus. The labels may be applied to the display device or to the surrounding bezel. The adhesive labels have a number of disadvantages. The labels are relatively expensive, considering both the direct manufacturing costs as the labels typically have an expensive finish and the costs of developing new labels as products develop. There is also a risk of the removal of the labels causing damage to the display device or to the surrounding bezel of the television apparatus.

According to the present invention, there is provided a television apparatus comprising:
a display device;
a receiver-decoder circuit for receiving and decoding an input television signal to generate a video signal representing a video image, the television apparatus being arranged to supply the generated video signal to the display device for display of the video image,
wherein the television apparatus is arranged, in a predetermined mode of operation, to display promotional graphics that indicate technical information about the television apparatus superimposed on the displayed video image.

Thus promotional labelling is provided by superimposing promotional graphics indicating technical information about the television apparatus on the displayed video image. This provides a number of advantages over the use of adhesive labels. The cost is significantly reduced. Manufacturing costs are reduced because the labels are effectively implemented in software without the need to make or apply adhesive labels. It is also straightfoward to change the labels as products develop. Furthermore the risk of damage from physical removal of an adhesive label is avoided altogether.

To allow better understanding, an embodiment of the present invention will now be described by way of non-limitative example with reference to the accompanying drawings, in which:
Fig.1 is a diagram of a television apparatus;
Fig. 2 is a front view of the television apparatus displaying a video image and promotional graphics;
Fig. 3 is a front view of the television apparatus promotional graphics in the event of no input television signal; and
Fig. 4 is a screen of a graphical user interface.

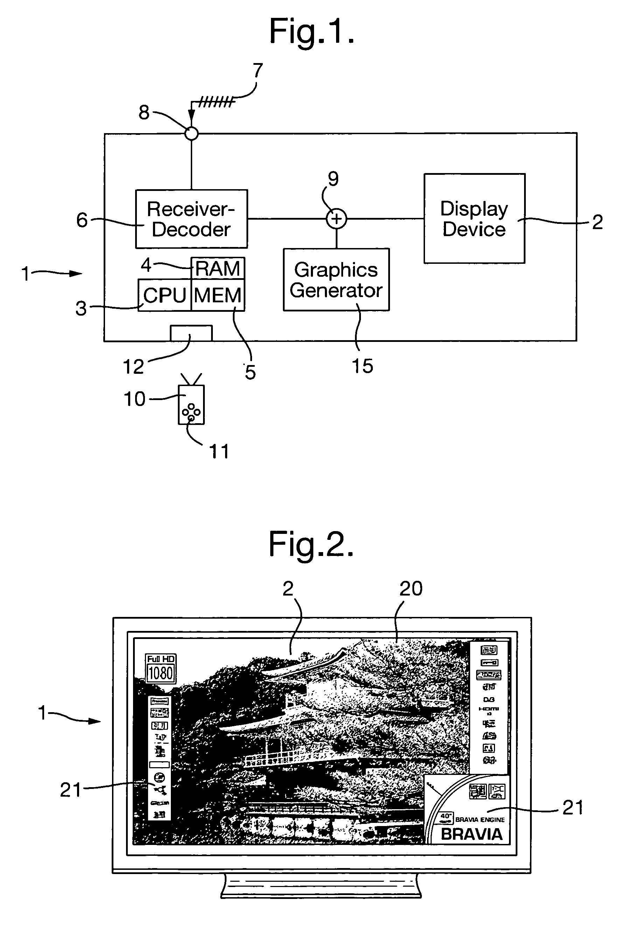

Fig. 1 shows a television apparatus 1 including a display device 2 which may be of any type for example an LCD (liquid crystal display) display device.

The television apparatus 1 includes a controller 3 which controls the operation of the television apparatus 1. The controller 3 may be implemented by a microprocessor running an appropriate program. The controller 3 has associated therewith a RAM 4 and a non-volatile memory 5 such as a flash memory. The computer program may be stored in the non-volatile memory 5.

The television apparatus 1 further comprises an infrared (IR) remote control unit 10 including buttons 11 acting as a user-interface for accepting user-inputs by pressing of the buttons, as well as an IR receiver 12 for receiving IR signals representing the user-inputs from the remote control unit 10. The operation of the television apparatus 1 is controlled by the controller 3 on the basis of those user-inputs. Of course there may also be buttons on the television apparatus 1 itself for accepting user inputs.

The television apparatus 1 includes a receiver-decoder circuit 6 which is supplied with a broadcast television signal input into the television apparatus 1 from an antenna 7 connected to a socket 8. The receiver-decoder circuit 6 has a conventional construction for receiving and decoding the television signal to derive a video signal representing a video image. The operation of the receiver-decoder circuit 6 is controlled by the controller 3 to select the desired broadcast channel. Although the receiver-decoder circuit 6 is illustrated as being for a terrestrial broadcast television signal, it could alternatively or additionally receive and decode a television signal delivered in any manner, for example as a cable or satellite broadcast or over a network, eg IP-TV.

The video signal is supplied to the display device 2 via insertion logic 9 described below. The display device 2 is driven on the basis of the video signal to display the video image.

The television apparatus 1 further includes a graphics generator 15 which is operable under the control of the controller 3 to generate graphics signals representing graphics for display on the display device 2. The graphics signals are supplied to the insertion logic 9 which inserts the graphics signal into the video signal supplied from the receiver-decoder circuit 6 to the display device 2.The insertion logic 9 may for example be a mixer. In this manner the graphics are displayed on the display device superimposed on the video image. The timing of the insertion, relative to the frame periods of the video signal, is controlled to display the graphics at any desired position on the video image. The graphics signal may replace a portion of the video signal or be mixed therewith so that the video image remains visible and graphics are overlaid and appear translucent.

The graphics generator 15 may be controlled to implement an on-screen display providing a conventional man-machine interface, allowing the user to control the television apparatus 1.

In addition, the graphics generator 15 may be controlled to insert graphics being promotional graphics that indicate technical information about the television apparatus. The promotional graphics thus may be used for promotional purposes in place of adhesive labels. In general the promotional graphics may take any form, for example being logos and/or words that indicate technical information. By way of example, Fig. 2 shows the television apparatus 1 on which there is displayed on the display device 2 a video image 20 having superimposed thereon promotional graphics 21 in the form of logos.

Being generated electronically, the promotional graphics avoid the risk of damage associated with the removal of physical labels. The promotional graphics also have the particular advantage of being easy to change to any desired form to indicate any aspects of the technical specification of the television apparatus 1.

Another advantage over adhesive labels is that the graphics generator 15 can be controlled to cause display of promotional graphics that change over time, for example being animated, scrolling or consisting of plural sequentially displayed pages. In this manner it is possible to increase the amount of information displayed and/or to attract the attention of a potential purchaser.

The promotional graphics are displayed continuously during a change in the channel of the television signal. This is achieved simply by continuing to supply the graphics signal from the graphics generator 15 to the insertion logic 9. In this case, when the channels changes, the video signal output from the receiver-decoder circuit 6 correspondingly changes but the graphics signal continues to be inserted by the insertion logic 9.

Desirably, the promotional graphics are displayed when the television apparatus 1 is on being promoted, for example in a shop, and are not displayed when the television apparatus 1 is being used by an end user, for example in a home. The television apparatus 1 is arranged as follows to achieve this.

Under the control of the controller 3, the television apparatus 1 is selectively operable in two different modes, being a normal mode intended for use by the end user and a promotional mode intended for use when the television apparatus 1 is being promoted. The television apparatus 1 is arranged to display the promotional graphics when in the promotional mode, but not when in the normal mode. Of course the television apparatus 1 could also have other modes of operation.

Typically the television apparatus 1 will be arranged to operate in a predetermined manner in the normal mode and to operate in a different manner in the promotional mode than in the normal mode, to assist the promotion of the television apparatus 1. Various different types of operation may be applied in the promotional mode for example as follows.

A first option is for the television apparatus 1 to perform in said promotional mode a restricted subset of the predetermined functions which are available in the normal mode. This can simplify the operation of the television apparatus 1 while it is being promoted.

A second option is for the default values of the brightness settings that control the brightness of the image displayed on the display device 2 to provide higher brightness in the promotional mode than in the normal mode. This can assist in improving the image quality when the television apparatus 1 is promoted in a shop which will typically be a bright environment.

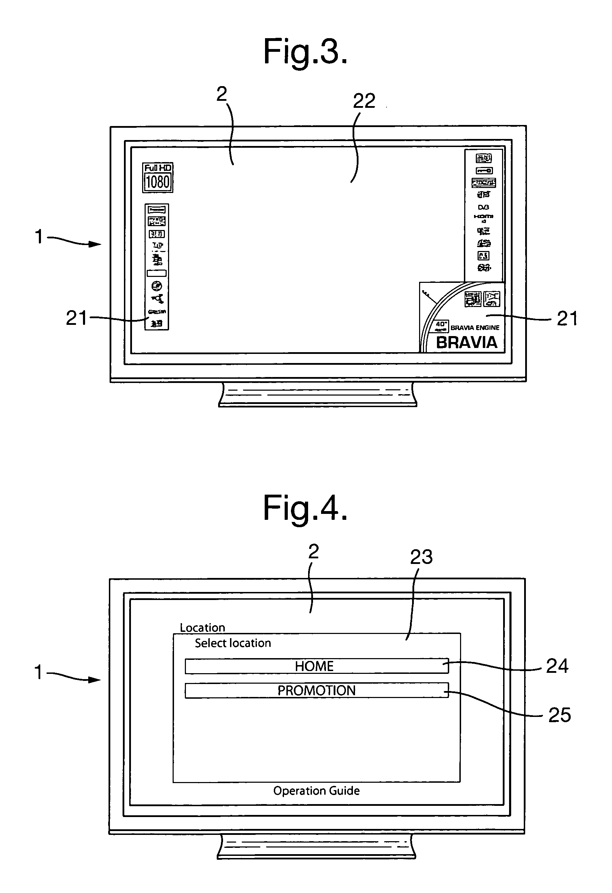

A third option is for the television apparatus to be arranged, when in the normal mode, to switch to a standby state in which the television apparatus has a lower power consumption than when in said normal mode, in response to an absence of an input television signal for a predetermined period, but for this feature to be disabled when in the promotional mode. This prevents the television apparatus 1 switching automatically to a standby state when it is being promoted. In this manner, the promotional graphics remain displayed even in the absence of an input television signal. In this case the video image is blank. An example of this is illustrated in Fig. 3 which shows the television apparatus 1 on which there is displayed on the display device 2 a blank video image 22 having promotional graphics 21 superimposed thereon.

The selection of the modes may be achieved in any suitable manner.

A first alternative for selection between the modes is for the controller 3 to switch the operation of the television apparatus 1 between the modes in response to a predetermined operation of the buttons 11 of the remote control unit 10, or of any other user-input interface if provided.

Desirably the predetermined operation is one which is not likely to occur accidentally during normal operation, in order to limit the risk of the end user entering the promotion mode when not desired. For example, the predetermined operation may be: simultaneous presses of a predetermined combination of the buttons 11; presses of at least one button 11 for a predetermined period longer than required for the remote control unit 10 to register the pressing thereof, preferably a second or more, typically 5 seconds; or repeated presses of at least one button 11.

A second alternative for selection between the modes is to require the user to select the mode then power is applied to the television apparatus 1 for the first time after manufacture. This may be achieved by the controller 3 controlling the graphics generator 15 to generate a graphical user interface (GUI) for display on the display device 2 allowing the user to select between the two modes. By way of example, Fig. 4 shows the television apparatus 1 with the display device 2 displaying such a GUI 23 including a box 24 labelled "HOME" for selection of the normal mode and a box 25 labelled "PROMOTION" for selection of the promotion mode. Using the remote control unit 10, the user can provide user-inputs to select between the boxes 24 and 25, on the basis of which the controller 3 causes the television apparatus to operate in the selected mode.

In this case, optionally the promotional graphics may be displayed during an initial set-up operation performed immediately after the normal mode is selected to allow the user to set various settings such as the colour and contrast setting. The normal mode in which the promotional graphics are not displayed commences subsequently to the set-up operation.

The user interface may additionally allow the user to re-select or switch between the modes at a subsequent time.

## Claims

1. A television apparatus comprising:
a display device;
a receiver-decoder circuit for receiving and decoding an input television signal to generate a video signal representing a video image, the television apparatus being arranged to supply the generated video signal to the display device for display of the video image,
wherein the television apparatus is arranged, in a predetermined mode of operation, to display promotional graphics that indicate technical information about the television apparatus, superimposed on the displayed video image.

2. A television apparatus according to claim 1, wherein the televison apparatus is selectively operable in one of a plurality of modes including a normal mode and a promotional mode, the televison apparatus being arranged to display said promotional graphics in said promotional mode, but not in said normal mode.

3. A television apparatus according to claim 2, wherein the television apparatus is arranged to operate in a predetermined manner in the normal mode and to operate in a different manner in the promotional mode than in the normal mode.

4. A television apparatus according to claim 3, wherein in said normal mode the television apparatus is arranged to perform predetermined functions and in said promotional mode the television apparatus is arranged to perform a restricted subset of said predetermined functions.

5. A television apparatus according to claim 3 or 4, wherein the display device has brightness settings that control the brightness of the image displayed thereon, the brightness settings in the promotional mode having default values which provide higher brightness than the default values of the brightness settings in the normal mode.

6. A television apparatus according to any one of claims 3 to 5, wherein the television apparatus is arranged, when in said normal mode, but not in said promotional mode, to switch to a standby state in which the television apparatus has a lower power consumption than when in said normal mode, in response to an absence of an input television signal for a predetermined period.

7. A television apparatus according to any one of claims 2 to 6, wherein the television apparatus is arranged when power is applied for the first time after manufacture to allow the user to provide user-input selecting one of said modes and in response to such user-input to operate in the mode selected by the user-input.

8. A television apparatus according to any one of claims 2 to 6, wherein
the television apparatus has an user-input interface comprising buttons; and
the televison apparatus is arranged to switch between said normal mode and said promotional mode in response either to a predetermined operation of said buttons of said user-input interface.

9. A television apparatus according to claim 8, wherein said predetermined operation is one of: simultaneous pressing of a predetermined combination of buttons; pressing of at least one button for a predetermined period; or repeated pressing of at least one button

10. A television apparatus according to claim 9, wherein the predetermined period is a second or more.

11. A television apparatus according to any one of claims 8 to 10, wherein said user-input interface comprises a remote control unit.

12. A television apparatus according to any one of the preceding claims, wherein the television apparatus further comprises:
a graphics generator arranged to generate a graphics signal representing the promotional graphics; and
insertion logic, through which insertion logic the video signal is supplied from the receiver-decoder circuit to the display device, the insertion logic being arranged to insert the graphics signal generated by the graphics generator into the video signal for display of said promotional graphics.

13. A television apparatus according to any one of the preceding claims, wherein the televison apparatus is arranged to display said promotional graphics continuously during a change in the channel of the television signal.

14. A television apparatus according to any one of the preceding claims, wherein the television apparatus is arranged, in said predetermined mode of operation, to display said promotional graphics as promotional graphics that change over time.

15. A television apparatus according to claim 14, wherein the television apparatus is arranged, in said predetermined mode of operation, to display said promotional graphics as promotional graphics that scroll or as promotional graphics consisting of plural sequentially displayed pages.
